(19) **Europäisches Patentamt**
**European Patent Office**
**Office européen des brevets**

(11) **EP 3 748 191 B1**

(12) **EUROPÄISCHE PATENTSCHRIFT**

(45) Veröffentlichungstag und Bekanntmachung des Hinweises auf die Patenterteilung:
**18.01.2023   Patentblatt 2023/03**

(21) Anmeldenummer: **19178204.4**

(22) Anmeldetag: **04.06.2019**

(51) Internationale Patentklassifikation (IPC):
**F16G 13/06** *(2006.01)*       **F16G 13/18** *(2006.01)*

(52) Gemeinsame Patentklassifikation (CPC):
**F16G 13/18; F16G 13/06**

(54) **OPTIMIERTE KETTENLÄNGENSTEUERUNG**

OPTIMIZED CHAIN LENGTH CONTROL

COMMANDE OPTIMISÉ DE LA LONGUEUR DE CHAÎNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.12.2020   Patentblatt 2020/50**

(73) Patentinhaber: **iwis mobility systems GmbH & Co. KG**
**81369 München (DE)**

(72) Erfinder:
• **Ritz, Andreas**
**81379 München (DE)**

• **Khani, Bahram**
**81927 München (DE)**
• **Urbanek, Andreas**
**81377 München (DE)**

(74) Vertreter: **Grünecker Patent- und Rechtsanwälte PartG mbB**
**Leopoldstraße 4**
**80802 München (DE)**

(56) Entgegenhaltungen:
**WO-A1-03/091599**

**Beschreibung**

Die vorliegende Erfindung betrifft ein Verfahren zur Kettenlängensteuerung einer Gelenkkette eines Kettentyps, die abwechselnd angeordnete, jeweils mittels eines Kettengelenks miteinander verbundene Innenkettenglieder und Außenkettenglieder umfasst, wobei jedes Außenkettenglied zwei Außenlaschen mit je zwei Öffnungen und zwei in die Öffnungen der Außenlaschen eingepresste Bolzen aufweist, und die Bolzen der Außenkettenglieder jeweils einen mit den Innenkettengliedern in Kontakt stehenden Gelenkbereich mit einem Gelenkdurchmesser und zwei in die Öffnungen der Außenlaschen eingepresste Fügebereiche mit einem Fügedurchmesser aufweisen.

Ein Beispiel für eine Gelenkkette ist aus der WO 03/091599 A1 bekannt. Dort wird eine Kette, insbesondere für Fahrrad-Antriebe, mit einander abwechselnden Außenkettengliedern und Innenkettengliedern beschrieben. Die Außenkettenglieder und die Innenkettenglieder sind mittels Kettengelenken gelenkig miteinander verbunden. Die Kettengelenke werden durch Bolzen und Hülsen ausgebildet. Insbesondere bei Fahrrädern mit Kettenschaltung sind das vordere und das hintere Kettenrad je nach eingestelltem Gang versetzt zueinander angeordnet, sodass die Kette schräg verläuft. Um auch bei schräg verlaufender Kette einen flächigen Kontakt zwischen den Hülsen und den darin angeordneten Bolzen zu ermöglichen, ist vorgesehen, dass die Außenfläche der Bolzen, zumindest in einem mittigen Bereich, und die Innenfläche der Hülsen ballig bzw. kugelförmig ausgebildet sind. Zudem weist jeder Bolzen ein erstes Ende und ein zweites Ende auf. Mit diesen Enden sind die Bolzen in Öffnungen in den Laschen der Außenkettenglieder eingepresst. Die Enden der Bolzen sind zylindrisch.

Die Kettenlänge einer Gelenkkette ergibt sich aus der Anzahl der Kettenglieder und der durchschnittlichen Teilung der Kette. Die durchschnittliche Teilung ($\bar{p}$) der Kette ergibt sich aus dem Funktionsmaß der Außenkettenglieder ($FM_{AKGl}$) und dem Funktionsmaß der Innenkettenglieder ($FM_{IKGl}$) gemäß folgender Formel:

$$\bar{p} = \frac{1}{2}(FM_{AKGl} + FM_{IKGl})$$

In einer vollständig montierten Kette liegen an den Bolzen der Außenkettenglieder die Hülsen der Innenkettenglieder an. Entsprechend wirkt sich der innere Abstand der Bolzen im Außenkettenglied direkt auf die Kettenlänge aus. Dieser innere Abstand der Bolzen ist das Funktionsmaß des Außenkettenglieds. Die Kettenlängensteuerung kann üblicherweise unter anderem dadurch realisiert werden, dass Bolzen mit unterschiedlichen Durchmessern verbaut werden. Wie oben beschrieben, wird mit dem Bolzendurchmesser das Funktionsmaß des Außenkettenglieds beeinflusst, welches sich direkt auf die Kettenlänge auswirkt. Dadurch, dass die Bolzen üblicherweise über ihre gesamte Länge eine zylindrische Form mit konstantem Durchmesser aufweisen, hat ein geänderter Bolzendurchmesser allerdings auch direkten Einfluss auf den Presssitz zwischen den Öffnungen in den Außenlaschen und den Bolzen. Ein größerer Durchmesser des Bolzens entspricht einem größeren Presssitzübermaß. Der Presssitz zwischen den Öffnungen und der Bolzen hat zur Folge, dass die Außenlaschen verformt werden. Die Bolzen verdrängen dabei das Material der Außenlaschen. Die Verformung der Außenlaschen erfolgt allerdings nicht gleichmäßig. Zu den Enden der Außenlaschen tritt eine stärkere Verformung auf als ins Innere der Außenlaschen. Auch dies führt wiederum zu einer Änderung des Funktionsmaßes der Außenkettenglieder. Bei der Kettenlängensteuerung durch Verwendung von zylindrischen Bolzen mit unterschiedlichen Durchmessern treten daher zwei einander überlagernde Effekte auf: zum einen die Änderung des Funktionsmaßes der Außenkettenglieder durch einen geänderten Bolzendurchmesser, zum anderen die Änderung des Funktionsmaßes durch die Verformung der Außenlaschen beim Einpressen der Bolzen in die Öffnungen der Außenlaschen. Dadurch wird die Einstellung der Kettenlänge über Änderung der Bolzendurchmesser der zylindrischen Bolzen relativ komplex.

Es ist daher die Aufgabe der vorliegenden Erfindung, ein Verfahren zur Kettenlängensteuerung einer Gelenkkette bereitzustellen, das die aus dem Stand der Technik bekannten Nachteile vermeidet und insbesondere zu einer einfacheren und effektiveren Kettenlängensteuerung beiträgt.

Diese Aufgabe wird erfindungsgemäß dadurch gelöst, dass das Verfahren die folgenden Schritte umfasst:

- Bereitstellen eines Bolzensatzes umfassend eine Mehrzahl von Bolzen, wobei mindestens zwei der Bolzen aus dem Bolzensatz unterschiedliche Gelenkdurchmesser der Gelenkbereiche aufweisen und sich bei mindestens einem der Bolzen aus dem Bolzensatz der Gelenkdurchmesser des Gelenkbereichs vom Fügedurchmesser der Fügebereiche unterscheidet,

- Ermitteln des für eine vorgegebene Kettenlänge erforderlichen Gelenkdurchmessers des Gelenkbereichs der Bolzen,

- Auswahl der Bolzen mit dem ermittelten Gelenkdurchmesser des Gelenkbereichs aus dem Bolzensatz,

- Einpressen der Fügebereiche der ausgewählten Bolzen in die Öffnungen in den Außenlaschen und Fertigstellen der Kette.

Mit einer Gelenkkette eines Kettentyps ist eine Gelenkkette mit einer festgelegten Anzahl an Kettengliedern (Innenkettenglieder und Außenkettenglieder) und mit einer vorgegebenen Kettenlänge bezeichnet.

Dadurch, dass ein Bolzensatz bereitgestellt wird, der eine Mehrzahl von Bolzen umfasst und sich die Bolzen des Bolzensatzes zumindest teilweise in ihren Gelenkdurchmessern unterscheiden, können die zur Einstellung der vorgegebenen Kettenlänge benötigten Bolzen des Bolzensatzes einfach ausgewählt werden. Die Bolzen des Bolzensatzes können entweder aus einer Vorratslagerung stammen oder nach Bedarf hergestellt werden. Da sich der Fügedurchmesser der Fügebereiche der Bolzen von dem Gelenkdurchmesser der Gelenkbereiche der Bolzen unterscheidet, führt eine Bearbeitung der Gelenkbereiche zur Einstellung des für die erforderliche Kettenlänge benötigten Gelenkdurchmessers nicht zu einer Veränderung der Fügebereiche der Bolzen. Die Verformungen in den Außenlaschen, die beim Einpressen der Fügebereiche der Bolzen in die Öffnungen in den Außenlaschen erzeugt werden, sind daher immer konstant und unabhängig vom Gelenkdurchmesser im Gelenkbereich der Bolzen. Dadurch wird die Auswirkung der einander überlagernden Effekte verringert und eine einfachere und effektivere Steuerung der Kettenlänge möglich.

Zwar sind aus anderen Bereichen der Kettentechnik bereits Bolzen bekannt, deren Durchmesser in den Fügebereichen sich vom Durchmesser in den Gelenkbereichen der Bolzen unterscheidet. Allerdings werden diese Bolzen nicht zur Kettenlängensteuerung eingesetzt, sondern dienen komplett anderen Zwecken. So werden derartige Bolzen beispielsweise zur Gewichtsreduzierung bei sehr großen Ketten eingesetzt. Auch in Seitenbogenketten werden Bolzen eingesetzt, deren Geometrie im Gelenkbereich sich von der Geometrie in den Fügebereichen unterscheidet. In diesem Fall führt dies dazu, dass die Seitenbogenketten bogenförmige Kurven fahren können.

Gemäß einer Variante des Verfahrens kann vorgesehen sein, dass die Fügebereiche aller Bolzen des Bolzensatzes identisch ausgebildet sind und der Gelenkdurchmesser der Gelenkbereiche der Bolzen auf den erforderlichen Durchmesser eingestellt wird. Es ist daher nur eine Bearbeitung der Gelenkbereiche der Bolzen erforderlich, die Fügebereiche werden immer gleich ausgestaltet, wodurch die Herstellung der Bolzen vereinfacht wird.

Vorzugsweise kann der Gelenkdurchmesser der Gelenkbereiche der Bolzen größer oder gleich dem Fügedurchmesser der Fügebereiche der Bolzen sein. Eine Bearbeitung der Bolzen im Bereich des Gelenks, d. h. eine Bearbeitung des Gelenkdurchmessers, hat dann keinen Einfluss auf den Fügedurchmesser, sodass sichergestellt ist, dass die Fügebereiche aller Bolzen identisch ausgebildet sind. Dadurch sind die beim Einpressen der Bolzen in die Öffnungen in den Außenlaschen auftretenden Deformationen der Außenlaschen immer gleich, und können entsprechend einfach bei der Einstellung der Kettenlänge berücksichtigt werden.

In einer weiteren Variante kann vorgesehen sein, dass jedes Innenkettenglied zwei quer zur Längsrichtung der Kette beabstandet zueinander angeordnete Innenlaschen und zwei Hülsen umfasst, jede Innenlasche zwei Öffnungen aufweist, in die die Hülsen eingepresst sind und die Hülsen die Innenlaschen beabstandet zueinander halten, und die Bolzen der Außenkettenglieder mit ihren Gelenkbereichen durch die Hülsen zweier benachbarter Innenkettenglieder geführt sind. Die Ketten sind daher als Hülsenketten ausgestaltet. Dies führt zu einer einfachen Herstellbarkeit der Kette. Es wäre allerdings auch denkbar, die Kette als Rollenkette auszubilden. In diesem Fall ist auf jeder Hülse der Innenkettenglieder eine Rolle drehbar angeordnet.

Gemäß einer besonders bevorzugten Variante kann vorgesehen sein, dass an den Fügebereichen der Bolzen eine Fügefase vorgesehen ist. Im Bereich der Fügefase verändert sich der Durchmesser der Fügebereiche der Bolzen und nimmt ausgehend von dem Gelenkbereich der Bolzen hin zu den jeweiligen Bolzenenden ab. Mit dem Begriff "Fügedurchmesser" ist bei einer derartigen Ausgestaltung der Fügebereiche der Bolzen der gemittelte Durchmesser der Fügebereiche, also die Hälfte der Summe des maximalen Durchmessers und des minimalen Durchmessers, bezeichnet. Diese Fügefase vereinfacht die Montage der Bolzen in den Außenlaschen und ermöglicht ein einfaches Zentrieren der Bolzen in den Öffnungen der Außenlaschen. Zudem wird eine beim Einpressen der Fügebereiche der Bolzen in die Öffnungen der Außenlaschen auftretende Deformation der Außenlaschen reduziert. Dies führt zum einen zu einer Erhöhung der Dauerfestigkeit der Kette. Zum anderen wird dadurch der Einfluss des Einpressens der Bolzen in die Öffnungen der Außenlaschen auf die Kettenlänge weiter verringert.

Vorzugsweise kann die Länge der Fügefase etwa 0,4 bis 2,5 mm, bevorzugt 0,6 bis 1,5 mm betragen. Es hat sich gezeigt, dass bei einer Länge im angegebenen Bereich eine gute Montage ermöglicht wird und dennoch sichergestellt ist, dass ein ausreichend hoher Presssitz zwischen Bolzen und Öffnungen in den Außenlaschen und damit eine gute Dauerfestigkeit der Kette erreicht wird.

Ein sicherer Halt der Bolzen in den Öffnungen der Außenlaschen bei dennoch geringer Verformung und ausreichende Dauerfestigkeit wird dann erzielt, wenn die Länge der Fügefase etwa der Dicke der Außenlaschen entspricht.

Eine einfache Montage und eine erwünschte Erhöhung der Dauerfestigkeit der Ketten kann erzielt werden, wenn der Fasenwinkel der Fügefase etwa 0,3° bis 2°, bevorzugt 0,5° bis 1° beträgt. Der Fasenwinkel ist im vorliegenden Fall der Winkel zwischen der Verlängerung der Mantelfläche des zylindrischen Mittelteils des Bolzens und der Mantelfläche der Fügefase.

Eine einfache Herstellung der Bolzen und eine einfache Montage wird ermöglicht, wenn die Fügefase einen linearen Verlauf aufweist. Die Fügefase ist dann konusförmig ausgebildet, hat also die Form eines geraden Kreiskegelstumpfs.

Es kann aber auch vorgesehen sein, dass die Fügefase einen progressiven oder einen degressiven Verlauf aufweist. Dadurch wird der Halt der Bolzen in den Außenlaschen der Ketten verbessert.

Ferner bezieht sich die Erfindung auch auf die Verwendung eines Bolzens in dem vorstehend beschriebenen Verfahren zur Kettenlängensteuerung einer Gelenkkette eines Kettentyps.

Auch hier besteht die Aufgabe der vorliegenden Erfindung darin, einen Bolzen bereitzustellen, der bei seiner Verwendung in einem Verfahren zur Kettenlängensteuerung einer Gelenkkette eines Kettentyps, die aus dem Stand der Technik bekannten Nachteile vermeidet und insbesondere zu einer einfacheren und effektiveren Kettenlängensteuerung beiträgt.

Hierzu ist erfindungsgemäß vorgesehen, dass der Bolzen einen mittleren Gelenkbereich mit einem Gelenkdurchmesser und an beiden Seiten an den Gelenkbereich anschließende Fügebereiche mit einem Fügedurchmesser aufweist, wobei der Fügedurchmesser der Fügebereiche des Bolzens bei einer Änderung des Gelenkdurchmessers des Gelenkbereichs des Bolzens unverändert bleibt. Durch die entsprechende Ausgestaltung des Bolzens kann der Gelenkdurchmesser des Gelenkbereichs verändert werden, d. h. auf den zur Einstellung der vorgegebenen Kettenlänge erforderlichen Durchmesser eingestellt werden, ohne dass dadurch der Durchmesser der Fügebereiche beeinflusst wird. Eine Veränderung des Gelenkdurchmessers des Bolzens zur Kettenlängensteuerung führt daher nicht zu einer veränderten Form der Fügebereiche, insbesondere der Fügefase, und somit auch zu keinen Änderungen im Verformungsverhalten der Außenlaschen beim Einpressen der Bolzen in die Öffnungen der Außenlaschen, die die Kettenlänge zusätzlich beeinflussen würden. Der Bolzen weist die oben in Bezug auf das Verfahren beschriebenen Merkmale auf. Insbesondere kann vorgesehen sein, dass an den Fügebereichen der Bolzen eine Fügefase ausgebildet ist, die Länge der Fügefase etwa 0,4 bis 2,5 mm, bevorzugt 0,6 bis 1,5 mm beträgt und dass die Länge der Fügefase etwa der Dicke der Außenlaschen entspricht. Der Fasenwinkel der Fügefase der Bolzen beträgt etwa 0,3° bis 2°, bevorzugt 0,5° bis 1°. Die Fügefase der Bolzen kann einen linearen oder auch einen progressiven oder einen degressiven Verlauf aufweisen.

Die vorliegende Erfindung bezieht sich auch auf einen Bolzensatz zur Kettenlängensteuerung einer Gelenkkette eines Kettentyps, umfassend eine Mehrzahl von Bolzen, wobei jeder der Bolzen einen Gelenkbereich mit einem Gelenkdurchmesser und zwei an beiden Seiten an den Gelenkbereich anschließende Fügebereiche mit einem Fügedurchmesser aufweist. Der Bolzensatz wird in dem oben beschriebenen Verfahren eingesetzt.

Auch hier besteht die Aufgabe der vorliegenden Erfindung darin, einen Bolzensatz bereitzustellen, der bei seiner Verwendung in einem Verfahren zur Kettenlängensteuerung einer Gelenkkette die aus dem Stand der Technik bekannten Nachteile vermeidet und insbesondere zu einer einfacheren und effektiveren Kettenlängensteuerung beiträgt.

Diese Aufgabe wird erfindungsgemäß dadurch gelöst, dass mindestens zwei der Bolzen des Bolzensatzes unterschiedliche Gelenkdurchmesser aufweisen und sich bei mindestens einem der Bolzen der Gelenkdurchmesser von dem Fügedurchmesser unterscheidet. Aus dem Bolzensatz können dann die jeweils erforderlichen Bolzen zur Einstellung der vorgegebenen Kettenlänge ausgewählt werden. Da sich der Gelenkdurchmesser vom Fügedurchmesser unterscheidet, führt eine Bearbeitung der Bolzen im Gelenkbereich nicht zu einer Veränderung in den Fügebereichen. Eine aus dem Stand der Technik bekannte unterschiedliche Verformung der Außenlaschen durch entsprechend unterschiedlich ausgestaltete Fügebereiche der Bolzen wird dadurch vermieden, die Einstellung der Kettenlänge somit vereinfacht. Die Bolzen des Bolzensatzes können entweder aus Vorratslagerung stammen, d. h. es wird ein Vorrat mit verschiedenen Bolzen mit unterschiedlichen Gelenkdurchmessern bereitgehalten, oder nach Bedarf gefertigt werden.

Vorteilhafterweise kann vorgesehen sein, dass der Fügedurchmesser der Fügebereiche aller Bolzen des Bolzensatzes identisch ausgebildet ist und die Gelenkdurchmesser der Gelenkbereiche der Bolzen größer als oder gleich groß wie der Fügedurchmesser der Fügebereiche sind. Es kann auch vorgesehen sein, dass sich der Außendurchmesser des Bolzens beim Übergang vom Gelenkbereich in die Fügebereiche sprungartig ändert, d. h. sprungartig abnimmt. Der Fügebereich kann dann eine zylindrische Form haben.

In einer weiteren Variante kann vorgesehen sein, dass die Bolzen des Bolzensatzes in ihren Fügebereichen eine Fügefase aufweisen. Wie oben beschrieben, wirkt sich eine derartige Fügefase positiv auf die Verformung der Außenlaschen aus. Es wird dadurch ermöglicht, dass die für eine sichere Befestigung der Bolzen in den Öffnungen der Außenlaschen benötigte Druckspannung zwischen Außenlaschen und Bolzen erreicht wird. Die Außenlaschen sind daher sicher auf den Bolzen befestigt, ohne dass die Dauerfestigkeit der Außenlaschen erniedrigt wird. Diese Fügefase kann die oben beschriebenen Merkmale aufweisen.

Im Folgenden wird die Erfindung anhand von Figuren näher beschrieben. Es zeigen:

Fig. 1: Schnitt durch einen kurzen Bereich einer Gelenkkette, die nach dem erfindungsgemäßen Verfahren zur Kettenlängensteuerung hergestellt ist, und

Fig. 2: Bolzen eines Außenkettenglieds der Gelenkkette aus Fig. 1.

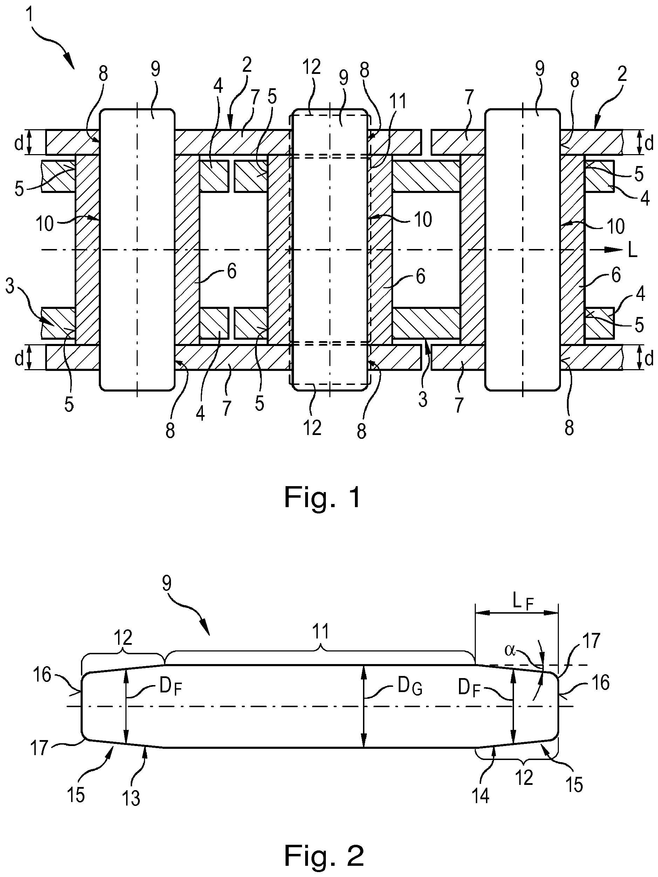

Fig. 1 zeigt einen Schnitt durch einen kurzen Abschnitt einer Gelenkkette 1 eines Kettentyps in einer Ebene parallel zur Längsrichtung L der Gelenkkette 1. Die Gelenkkette 1 umfasst abwechselnd angeordnete Außenkettenglieder 2 und Innenkettenglieder 3. Jedes Innenkettenglied 3 umfasst zwei beabstandet zueinander angeordnete und parallel zur Längsrichtung L der Gelenkkette 1 ausgerichtete Innenlaschen 4 und zwei Hülsen 6. Jede Innenlasche 4 weist jeweils zwei Öffnungen 5 auf. In die Öffnungen 5 jeder Innenlasche 4 sind die Hülsen 6 eingepresst, die die Innenlaschen 4 beabstandet zueinanderhalten.

Jedes Außenkettenglied 2 umfasst zwei Außenlaschen 7 mit jeweils zwei Öffnungen 8. In die Öffnungen 8 jeder Außenlasche 7 sind zwei Bolzen 9 eingepresst. Die Bolzen 9 halten die Außenlaschen 7 beabstandet zueinander. Auch die Außenlaschen 7 sind parallel zur Längsrichtung L der Gelenkkette 1 ausgerichtet. Die Bolzen 9 der Außenkettenglieder 2 sind durch die Hülsen 6 zweier benachbarter Innenkettenglieder 3 geführt und verbinden so nebeneinander angeordnete Innenkettenglieder 3 miteinander. Die Hülsen 6 der Innenkettenglieder 3 und die durch die Hülsen 6 geführten Bolzen 9 der Außenkettenglieder 2 bilden Kettengelenke 10 aus. Die Bolzen 9 der Außenkettenglieder 2 weisen daher zwei unterschiedliche Funktionsbereiche auf. Dies ist zum einen ein mittiger Gelenkbereich 11, also der Bereich der Bolzen 9, der durch die Hülsen 6 der Innenkettenglieder 3 geführt ist und mit diesen zusammen das Kettengelenk 10 ausbildet und zwei Fügebereiche 12, die sich an beiden Enden der Bolzen 9 an den mittigen Gelenkbereich 11 anschließen. Mit diesen Fügebereiche 12 sind die Bolzen 9 in die Öffnungen 8 der Außenlaschen 7 eingepresst.

In Fig. 2 ist ein Bolzen 9 der Gelenkkette 1 aus Fig. 1 in Vergrößerung (nicht maßstabsgetreu) dargestellt. Der Bolzen 9 weist an jedem seiner Enden 13, 14 die Fügebereiche 12 auf. Die Fügebereiche 12 unterscheiden sich in ihrer Form von dem mittigen Gelenkbereich 11 des Bolzens 9. Im Gelenkbereich 11 ist der Bolzen 9 zylindrisch ausgebildet und weist einen konstanten Gelenkdurchmesser $D_G$ auf. In den Fügebereichen 12 ist der Bolzen 9 im in Fig. 2 dargestellten Ausführungsbeispiel konisch ausgebildet und weist einen mittleren Durchmesser, den Fügedurchmesser $D_F$, auf. Der Fügedurchmesser $D_F$ ist kleiner als der Gelenkdurchmesser $D_G$. Durch die konische Form der Fügebereiche 12 sind diese als Fügefase 15 ausgebildet. Die Fügebereiche 12 und damit auch die Fügefasen 15 an beiden Enden 13, 14 des Bolzens 6 sind identisch zueinander ausgebildet. Die Fügebereiche 12 sind die Bereiche des Bolzens 6, die im fertig montierten Zustand der Kette 1 in den Öffnungen 8 der Außenlaschen 7 angeordnet sind. Im vorliegenden Kontext ist unter einer Fügefase ein Bereich des Bolzens zu verstehen, in der der Durchmesser des Bolzens abnimmt, sodass die Montage der Bolzen 9 in der jeweiligen Öffnung 8 der Außenlaschen erleichtert wird. Im in Fig. 2 dargestellten Fall sind die beiden Fügefasen 15 durch eine konische Verjüngung ausgebildet. Jede Fügefase 15 weist eine Länge $L_F$ auf. Diese Länge $L_F$ beträgt etwa 0,4 bis 2,5 mm, vorzugsweise 0,6 bis 1,5 mm. In etwa entspricht die Länge $L_F$ der Fügefase 15 der Dicke d der Außenlaschen 7. Der Fasenwinkel $\alpha$ der Fügefasen 15 liegt in einem Bereich von etwa 0,3° bis 2°, vorzugsweise 0,5° bis 1°. Der Fasenwinkel $\alpha$ ist im vorliegenden Fall der Winkel zwischen der Verlängerung der Mantelfläche $A_G$ des zylindrischen Mittelteils des Bolzens und der Mantelfläche $A_F$ der Fügefasen 15. Wie bereits beschrieben, ist die Mantelfläche $A_F$ der Fügefasen 15 konusförmig und entspricht daher im Wesentlichen einem geraden Kreiskegelstumpf. Der Bolzen 9 weist an seinen beiden Stirnseiten 16 eine Abrundung 17 auf. Diese Abrundung 17 weist einen Radius r von etwa 0,4 mm auf.

Die Außenfläche der Fügefase muss aber keine exakte konische Fläche darstellen. Es ist ausreichend, wenn der oben beschriebene Bereich der Fasenwinkel eingehalten wird. Es ist dann auch ein progressiver oder degressiver Fasenverlauf möglich.

In weiteren Ausführungsformen können die Fügebereiche der Bolzen auch ohne Fügefase ausgebildet sein und dann beispielsweise ebenfalls eine zylindrische Form aufweisen. Wichtig ist, dass der Gelenkdurchmesser des Gelenkbereichs der Bolzen verändert werden kann, ohne dass der Fügedurchmesser der Bolzen verändert wird. Dies kann z. B. dadurch realisiert werden, dass sich der Fügedurchmesser der Fügebereiche von dem Gelenkdurchmesser des Gelenkbereichs unterscheidet. Der Gelenkdurchmesser des Gelenkbereichs kann dann eingestellt werden, ohne dass die Fügebereiche bzw. der Fügedurchmesser verändert werden. Unabhängig vom Gelenkdurchmesser haben die Fügebereiche dann immer die gleiche Form, sodass die Verformung der Außenlaschen beim Einpressen der Bolzen in die Außenlaschen immer identisch ist und die Kettenlängensteuerung dadurch nicht beeinflusst wird.

In Fig. 1 ist nur ein kurzer Abschnitt der Gelenkkette 1, nämlich ein Außenkettenglied 2 und ein damit verbundenes Innenkettenglied 3 mit den jeweils folgenden Außen- bzw. Innenkettengliedern gezeigt. Die vollständige Gelenkkette des einen Kettentyps umfasst eine bestimmte Anzahl von Außenkettengliedern 2 und Innenkettengliedern 3 und eine festgelegte Kettenlänge. Um die Kettenlänge der Gelenkkette des bestimmten Kettentyps exakt einzustellen, wird ein Verfahren zur Kettenlängensteuerung angewendet, dass im Folgenden mithilfe der Figuren 1 und 2 näher beschrieben wird.

Die Kettenlängensteuerung wird dadurch realisiert, dass Bolzen 9 mit verschiedenen Gelenkdurchmessern $D_G$ verbaut werden. Um die Kettenlänge einer Gelenkkette eines Kettentyps einzustellen, wird daher ein Bolzensatz bereitgestellt, der eine Mehrzahl von Bolzen 9 umfasst. Wie oben beschrieben, weist jeder dieser Bolzen 9 einen Gelenkbereich 11 mit einem Gelenkdurchmesser $D_G$ und zwei Fügebereiche 12 mit einem Fügedurchmesser $D_F$ auf. In dem Bolzensatz sind Bolzen 9 mit unterschiedlichen Gelenkdurchmessern $D_G$ enthalten. Der Fügedurchmesser $D_F$ ist bei allen Bolzen 9 identisch. Zunächst wird dann der für die vorgegebene Kettenlänge der Gelenkkette des bestimmten Kettentyps erforderliche Gelenkdurchmesser $D_G$ ermittelt. Aus dem Bolzensatz werden dann die entsprechenden Bolzen 9 mit dem ermittelten Gelenkdurchmesser $D_G$ ausgewählt. Es werden die Innenkettenglieder 3 mit den in die Innenlaschen 4 eingepressten Hülsen 6 bereitgestellt. Die ausgewählten Bolzen 9 werden durch die Hülsen 6 der Innenkettenglieder 3 geführt, sodass der Gelenkbereich 11 der Bolzen 9 in den Hülsen 6 der Innenkettenglieder angeordnet ist. Die Bolzen 9 werden in die Öffnungen 8 der Außenlaschen 7 eingepresst. Dadurch werden die Außenkettenglieder 2 geschlossen und somit die Gelenkkette fertiggestellt.

Bezugszeichenliste

1     Gelenkkette
2     Außenkettenglied
3     Innenkettenglied
4     Innenlasche
5     Öffnung der Innenlasche
6     Hülse
7     Außenlaschen
8     Öffnungen der Außenlasche
9     Bolzen
10    Kettengelenk
11    Gelenkbereich
12    Fügebereiche
13    Ende Bolzen
14    Ende Bolzen
15    Fügefase
16    Stirnseite Bolzen
17    Abrundung

L     Längsrichtung Gelenkkette
$D_G$    Gelenkdurchmesser
$D_F$    Fügedurchmesser
$L_F$    Länge Fügefase
d     Dicke der Außenlaschen
$\alpha$    Phasenwinkel
$A_G$    Mantelfläche Gelenkbereich
$A_F$    Mantelfläche Fügefase

**Patentansprüche**

1. Verfahren zur Kettenlängensteuerung einer Gelenkkette (1) eines Kettentyps, die abwechselnd angeordnete, jeweils mittels eines Kettengelenks (10) miteinander verbundene Innenkettenglieder (3) und Außenkettenglieder (2) umfasst, wobei jedes Außenkettenglied (2) zwei Außenlaschen (7) mit je zwei Öffnungen (8) und zwei in die Öffnungen (8) der Außenlaschen (7) eingepresste Bolzen (9) aufweist, die Bolzen (9) der Außenkettenglieder (2) jeweils einen mit den Innenkettengliedern (3) in Kontakt stehenden Gelenkbereich (11) mit einem Gelenkdurchmesser ($D_G$) und zwei in die Öffnungen (8) der Außenlaschen (7) eingepresste Fügebereiche (12) mit einem Fügedurchmesser ($D_F$) aufweisen, **gekennzeichnet durch** die folgenden Schritte:

    - Bereitstellen eines Bolzensatzes umfassend eine Mehrzahl von Bolzen (9), wobei mindestens zwei der Bolzen (9) aus dem Bolzensatz unterschiedliche Gelenkdurchmesser ($D_G$) der Gelenkbereiche (11) aufweisen und sich bei mindestens einem der Bolzen (9) aus dem Bolzensatz der Gelenkdurchmesser ($D_G$) des Gelenkbereichs (11) vom Fügedurchmesser ($D_F$) der Fügebereiche (12) unterscheidet,
    - Ermitteln des für eine vorgegebene Kettenlänge erforderlichen Gelenkdurchmessers ($D_G$) des Gelenkbereichs (11) der Bolzen (9),
    - Auswahl der Bolzen (9) mit dem ermittelten Gelenkdurchmesser ($D_G$) des Gelenkbereichs (11) aus dem Bolzensatz,
    - Einpressen der Fügebereiche (12) der Bolzen (9) in die Öffnungen (8) in den Außenlaschen (7) und Fertigstellen der Gelenkkette (1).

2. Verfahren nach Anspruch 1, **dadurch gekennzeichnet, dass** die Fügebereiche (12) aller Bolzen (9) des Bolzensatzes identisch ausgebildet sind und der Gelenkdurchmesser ($D_G$) der Gelenkbereiche (11) der Bolzen (9) auf den erforderlichen Durchmesser eingestellt wird.

3. Verfahren nach Anspruch 1 oder 2, **dadurch gekennzeichnet, dass** der Gelenkdurchmesser ($D_G$) der Gelenkbereiche (11) der Bolzen (9) größer oder gleich dem Fügedurchmesser ($D_F$) der Fügebereiche (12) der Bolzen (9) ist.

4. Verfahren nach einem der vorhergehenden Ansprüche, **dadurch gekennzeichnet, dass** jedes Innenkettenglied (3) zwei quer zur Längsrichtung (L) der Gelenkkette (1) beabstandet zueinander angeordnete Innenlaschen (4) und zwei Hülsen (6) umfasst, jede Innenlasche (4) zwei Öffnungen (5) aufweist, in die die Hülsen (6) eingepresst sind und die Hülsen (6) die Innenlaschen (4) beabstandet zueinander halten, und die Bolzen (9) der Außenkettenglieder (2) mit ihren Gelenkbereichen (11) durch die Hülsen (6) zweier benachbarter Innenkettenglieder (3) geführt sind.

5. Verfahren nach einem der vorhergehenden Ansprüche, **dadurch gekennzeichnet, dass** an den Fügebereichen (12) der Bolzen (9) eine Fügefase (15) ausgebildet ist.

**6.** Verfahren nach einem der vorhergehenden Ansprüche, **dadurch gekennzeichnet, dass** die Länge ($L_F$) der Fügefase (15) etwa 0,4 bis 2,5 mm, bevorzugt 0,6 bis 1,5 mm beträgt.

**7.** Verfahren nach einem der vorhergehenden Ansprüche, **dadurch gekennzeichnet, dass** die Länge ($L_F$) der Fügefase (15) etwa der Dicke (d) der Außenlaschen (7) entspricht.

**8.** Verfahren nach einem der vorhergehenden Ansprüche, **dadurch gekennzeichnet, dass** der Fasenwinkel ($\alpha$) der Fügefase (15) etwa 0,3° bis 2°, bevorzugt 0,5° bis 1° beträgt.

**9.** Verfahren nach einem der Ansprüche 1 bis 8, **dadurch gekennzeichnet, dass** die Fügefase (15) einen linearen Verlauf aufweist.

**10.** Verfahren nach einem der Ansprüche 1 bis 8, **dadurch gekennzeichnet, dass** die Fügefase einen progressiven Verlauf aufweist.

**11.** Verfahren nach einem der Ansprüche 1 bis 8, **dadurch gekennzeichnet, dass** die Fügefase einen degressiven Verlauf aufweist.

**12.** Verwendung eines Bolzens (9) in einem Verfahren zur Kettenlängensteuerung einer Gelenkkette (1) eines Kettentyps nach einem der Ansprüche 1 bis 11, **dadurch gekennzeichnet, dass** der Bolzen (9) einen mittleren Gelenkbereich (11) mit einem Gelenkdurchmesser ($D_G$) und an beiden Seiten an den Gelenkbereich (11) anschließende Fügebereiche (12) mit einem Fügedurchmesser ($D_F$) aufweist, wobei der Fügedurchmesser ($D_F$) des Bolzens (9) bei einer Änderung des Gelenkdurchmessers ($D_G$) des Bolzens (9) unverändert bleibt.

**13.** Bolzensatz zur Kettenlängensteuerung einer Gelenkkette (1) eines Kettentyps, umfassend eine Mehrzahl von Bolzen (9), wobei jeder der Bolzen (9) einen Gelenkbereich (11) mit einem Gelenkdurchmesser ($D_G$) und zwei an beiden Seiten an den Gelenkbereich (11) anschließende Fügebereiche (12) mit einem Fügedurchmesser ($D_F$) aufweist, **dadurch gekennzeichnet, dass** mindestens zwei der Bolzen (9) unterschiedliche Gelenkdurchmesser ($D_G$) aufweisen und sich bei mindestens einem der Bolzen (9) der Gelenkdurchmesser ($D_G$) von dem Fügedurchmesser ($D_F$) unterscheidet.

**14.** Bolzensatz nach Anspruch 13, **dadurch gekennzeichnet, dass** der Fügedurchmesser ($D_F$) der Fügebereiche (12) aller Bolzen (9) identisch ausgebildet ist und die Gelenkdurchmesser ($D_G$) der Gelenkbereiche (11) der Bolzen (9) größer als oder gleich groß wie der Fügedurchmesser ($D_F$) der Fügebereiche (12) der Bolzen (9) sind.

**15.** Bolzensatz nach einem der Ansprüche 13 oder 14, **dadurch gekennzeichnet, dass** die Bolzen (9) in ihren Fügebereichen (12) eine Fügefase (15) aufweisen.

**Claims**

**1.** A method for controlling the length of a sprocket chain (1) of a chain type comprising alternately arranged inner chain links (3) and outer chain links (2) respectively connected to each other by means of a chain link (10), wherein each outer chain link (2) includes two outer link plates (7) each having two openings (8) and two pins (9) pressed into the openings (8) of the outer link plates (7), wherein the pins (9) of the outer chain links (2) each have a link region (11) with a link diameter ($D_g$) being in contact with the inner chain links (3) and two joint regions (12) with a joint diameter ($D_F$) pressed into the openings (8) of the outer link plates (7), **characterized by** the following steps:

- providing a pin set comprising a plurality of pins (9) wherein at least two of the pins (9) of the pin set have different link diameters ($D_G$) of the link regions (11) and wherein for at least one of the pins (9) of the pin set the link diameter ($D_G$) of the link region (11) differs from the joint diameter ($D_F$) of the joint regions (12),
- determining the link diameter ($D_G$) of the link region (11) of the pins (9) required for a specified chain length,
- selecting the pins (9) with the determined link diameter ($D_G$) of the link region (11) from the pin set,
- pressing the joint regions (12) of the pins (9) into the openings (8) in the outer link plates (7) and completing the sprocket chain (1).

**2.** The method according to claim 1, **characterized in that** the joint regions (12) of all pins (9) of the pin set are formed identically and **in that** the link diameter ($D_G$) of the link regions (11) of the pins (9) is adjusted to the required diameter.

**3.** The method according to claims 1 or 2, **characterized in that** the link diameter ($D_G$) of the link regions (11) of the pins (9) is bigger than or equal to the joint diameter ($D_F$) of the joint regions (12) of the pins (9).

**4.** The method according to any one of the preceding claims, **characterized in that** each inner chain link (3) comprises two inner link plates (4) arranged with an interval transversely to the longitudinal direction (L) of the sprocket chain (1) and two sleeves (6), **in**

**that** each inner link plate (4) includes two openings (5), into which the sleeves (6) are pressed, the sleeves (6) holding the inner link plates (4) in spaced relationship, and **in that** the pins (9) of the outer chain links (2) are guided with their link regions (11) through the sleeves (6) of two adjacent inner chain links (3).

5. The method according to any one of the preceding claims, **characterized in that** a jointing chamfer (15) is formed at the joint regions (12) of the pins (9).

6. The method according to any one of the preceding claims, **characterized in that** the length ($L_F$) of the jointing chamfer (15) is approximately 0.4 to 2.5 mm, preferably 0.6 to 1.5 mm.

7. The method according to any one of the preceding claims, **characterized in that** the length ($L_F$) of the jointing chamfer (15) is approximately equal to the thickness (d) of the outer link plates (7).

8. The method according to any one of the preceding claims, **characterized in that** the chamfer angle (a) of the jointing chamfer (15) is approximately 0.3° to 2°, preferably 0.5° to 1°.

9. The method according to any one of claims 1 to 8, **characterized in that** the jointing chamfer (15) has a linear course.

10. The method according to any one of claims 1 to 8, **characterized in that** the jointing chamfer has a progressive course.

11. The method according to any one of claims 1 to 8, **characterized in that** the jointing chamfer has a degressive course.

12. Use of a pin (9) in a method for controlling the length of a sprocket chain (1) of a chain type according to any one of claims 1 to 11, **characterized in that** the pin (9) includes a central link region (11) with a link diameter ($D_G$) and joint regions (12) with a joint diameter ($D_F$) adjacent to the link region (11) on both side, wherein the joint diameter ($D_F$) of the pin (9) remains unchanged when the joint diameter ($D_G$) of the pin (9) is changed.

13. A pin set for controlling the length of a sprocket chain (1) of a chain type, comprising a plurality of pins (9), wherein each of said pins (9) includes a link region (11) with a link diameter ($D_G$) and two joint regions (12) with a joint diameter ($D_F$) adjacent to the link region (11) on both sides and **characterized in that** at least two of the pins (9) have different link diameters ($D_G$) and for at least one of the pins (9), the link diameter ($D_G$) differs from the joint diameter ($D_F$).

14. The pin set according to claim 13, **characterized in that** the joint diameter ($D_F$) of the joint regions (12) of all pins (9) is formed identically and the link diameters ($D_G$) of the link regions (11) of the pins (9) are larger than or equal to the joint diameter ($D_F$) of the joint regions (12) of the pins (9).

15. The pin set according to any one of claims 13 or 14, **characterized in that** the pins (9) include a jointing chamfer (15) in their joint regions (12).

**Revendications**

1. Procédé de commande de longueur de chaîne d'une chaîne articulée (1) d'un type de chaîne, qui comprend des maillons de chaîne intérieure (3) et des maillons de chaîne extérieure (2) agencés en alternance, reliés entre eux respectivement au moyen d'une articulation de chaîne (10), dans lequel chaque maillon de chaîne extérieur (2) présentant deux plaques extérieures (7) avec respectivement deux ouvertures (8) et deux boulons (9) pressés dans les ouvertures (8) des plaques extérieures (7), les boulons (9) des maillons de chaîne extérieurs (2) présentant respectivement une zone d'articulation (11) en contact avec les maillons de chaîne intérieurs (3) avec un diamètre d'articulation ($D_G$) et deux zones d'assemblage (12) pressées dans les ouvertures (8) des plaques extérieures (7) avec un diamètre d'assemblage ($D_F$), **caractérisé par** les étapes suivantes consistant à :

   - mettre à disposition un ensemble de boulons comprenant une pluralité de boulons (9), dans lequel au moins deux des boulons (9) de l'ensemble de boulons présentent des diamètres d'articulation ($D_G$) des zones d'articulation (11) différents et, pour au moins un des boulons (9) de l'ensemble de boulons, le diamètre d'articulation ($D_G$) de la zone d'articulation (11) diffère du diamètre d'assemblage ($D_F$) des zones d'assemblage (12),
   - déterminer le diamètre d'articulation ($D_G$) nécessaire pour une longueur de chaîne prédéterminée de la zone d'articulation (11) des boulons (9),
   - sélectionner les boulons (9) avec le diamètre d'articulation déterminé ($D_G$) de la zone d'articulation (11) à partir de l'ensemble de boulons,
   - presser les zones d'assemblage (12) des boulons (9) dans les ouvertures (8) dans les plaques extérieures (7) et terminer la chaîne articulée (1).

2. Procédé selon la revendication 1, **caractérisé en ce que** les zones d'assemblage (12) de tous les boulons (9) de l'ensemble de boulons sont réalisées identiques et le diamètre d'articulation ($D_G$) des zones d'articulation (11) des boulons (9) est ajusté au diamètre requis.

3. Procédé selon la revendication 1 ou 2, **caractérisé en ce que** le diamètre d'articulation ($D_G$) des zones d'articulation (11) des boulons (9) est supérieur ou égal au diamètre d'assemblage ($D_F$) des zones d'assemblage (12) des boulons (9).

4. Procédé selon l'une quelconque des revendications précédentes, **caractérisé en ce que** chaque maillon de chaîne intérieur (3) comprend deux plaques intérieures (4) agencées espacées l'une de l'autre transversalement par rapport à la direction longitudinale (L) de la chaîne articulée (1) et deux manchons (6), chaque plaque intérieure (4) présente deux ouvertures (5) dans lesquelles les manchons (6) sont pressés et les manchons (6) maintiennent les plaques intérieures (4) espacées l'une de l'autre, et les boulons (9) des maillons de chaîne extérieures (2) sont guidés avec leurs zones d'articulation (11) à travers les manchons (6) de deux maillons de chaîne intérieurs (3) voisins.

5. Procédé selon l'une quelconque des revendications précédentes, **caractérisé en ce qu'**au moins un chanfrein d'assemblage (15) est formé au niveau des zones d'assemblage (12) des boulons (9).

6. Procédé selon l'une quelconque des revendications précédentes, **caractérisé en ce que** la longueur ($L_F$) du chanfrein d'assemblage (15) est d'environ 0,4 à 2,5 mm, de préférence de 0,6 à 1,5 mm.

7. Procédé selon l'une des revendications précédentes, **caractérisé en ce que** la longueur ($L_F$) du chanfrein d'assemblage (15) correspond à peu près à l'épaisseur (d) des plaques extérieures (7).

8. Procédé selon l'une quelconque des revendications précédentes, **caractérisé en ce que** l'angle de chanfrein (a) du chanfrein d'assemblage (15) est d'environ 0,3° à 2°, de préférence de 0,5° à 1°.

9. Procédé selon l'une quelconque des revendications 1 à 8, **caractérisé en ce que** le chanfrein d'assemblage (15) présente un tracé linéaire (21).

10. Procédé selon l'une quelconque des revendications 1 à 8, **caractérisé en ce que** le chanfrein d'assemblage présente un tracé linéaire progressif (21).

11. Procédé selon l'une quelconque des revendications 1 à 8, **caractérisé en ce que** le chanfrein d'assemblage présente un tracé linéaire dégressif (21).

12. Utilisation d'un boulon (9) dans un procédé de commande de longueur de chaîne d'une chaîne articulée (1) d'un type de chaîne selon l'une quelconque des revendications 1 à 11, **caractérisée en ce que** le boulon (9) présente une zone d'articulation centrale (11) avec un diamètre d'articulation ($D_G$) et des zones d'assemblage (12) avec un diamètre d'assemblage ($D_F$) se raccordant de part et d'autre à la zone d'articulation (11), dans lequel le diamètre d'assemblage ($D_F$) du boulon (9) reste inchangé en cas de modification du diamètre d'articulation ($D_G$) du boulon (9).

13. Ensemble de boulons pour commander la longueur d'une chaîne d'articulation (1) d'un type de chaîne, comprenant une pluralité de boulons (9), dans lequel chacun des boulons (9) présente une zone d'articulation (11) avec un diamètre d'articulation ($D_G$) et deux zones d'assemblage (12) avec un diamètre d'assemblage ($D_F$) se raccordant de part et d'autre à la zone d'articulation (11), **caractérisé en ce qu'**au moins deux des boulons (9) présentent des diamètres d'articulation ($D_G$) différents et, pour au moins un des boulons (9), le diamètre d'articulation ($D_G$) diffère du diamètre d'assemblage ($D_F$).

14. Ensemble de boulons selon la revendication 13, **caractérisé en ce que** le diamètre d'assemblage ($D_F$) des zones d'assemblage (12) de tous les boulons (9) est identique et **en ce que** le diamètre d'articulation ($D_G$) des zones d'articulation (11) des boulons (9) est supérieur ou égal au diamètre d'assemblage ($D_F$) des zones d'assemblage (12) des boulons (9).

15. Ensemble de boulons selon l'une quelconque des revendications 13 à 14, **caractérisé en ce que** les boulons (9) présentent un chanfrein d'assemblage (15) dans leurs zones d'assemblage (12).

Fig. 1

Fig. 2

**IN DER BESCHREIBUNG AUFGEFÜHRTE DOKUMENTE**

**In der Beschreibung aufgeführte Patentdokumente**

- WO 03091599 A1